# EUROPEAN PATENT SPECIFICATION

(11) **EP 4 165 907 B1**
(45) Date of publication and mention of the grant of the patent: **27.05.2026**
(21) Application number: 20939551.6
(22) Date of filing: 12.06.2020
(51) Int. Cl.: H04L 67/12, H04W 4/38, H04W 24/10, H04W 52/02, H04W 4/46, H04W 84/18, H04W 84/00, H04W 92/18

(54) **DYNAMIC SENSOR-SHARING WITH CONFIDENCE REQUIREMENTS**
DYNAMISCHE SENSORTEILUNG MIT VERTRAUENSANFORDERUNGEN
PARTAGE DYNAMIQUE DE CAPTEURS AVEC DES EXIGENCES DE CONFIANCE

(43) Date of publication of application: 19.04.2023
(73) Proprietor: QUALCOMM Incorporated, San Diego, CA 92121-1714 (US)
(72) Inventor: VASSILOVSKI, Dan, San Diego, California 92121-1714 (US); MARSH, Gene Wesley, San Diego, California 92121-1714 (US); YU, Lan, San Diego, California 92121-1714 (US); GUO, Hui, San Diego, California 92121-1714 (US); CHENG, Hong, San Diego, California 92121-1714 (US); PATIL, Shailesh, San Diego, California 92121-1714 (US)
(74) Representative: Tomkins & Co
(86) International application number: PCT/CN2020/095773
(87) International publication number: WO 2021/248441

(56) References cited:
- WO-A1-2018/236736
- WO-A1-2019/168457
- CN-A- 103 155 619
- CN-A- 106 465 039
- CN-A- 109 661 802
- CN-A- 110 520 748
- US-A1- 2006 114 113
- US-A1- 2017 118 620
- VOLKSWAGEN AG: "Draft - DTS/ITS-00167 v0.0.13 (TS 103 324 ) CPS", vol. WG ITS WG1 Application Requirements and Services, no. .0.13, 1 October 2019 (2019-10-01), pages 1 - 90, XP014354046, Retrieved from the Internet <URL:docbox.etsi.org/ITS/ITSWG1/05-CONTRIBUTIONS/2019/ITSWG1(19)000082_Draft_-_DTS_ITS-00167__v0_0_13__TS_103_324____CPS_/ITS-00167v0013.docx> [retrieved on 20191001]
- GARLICHS KENO ET AL: "Generation Rules for the Collective Perception Service", 2019 IEEE VEHICULAR NETWORKING CONFERENCE (VNC), IEEE, 4 December 2019 (2019-12-04), pages 1 - 8, XP033754653, DOI: 10.1109/VNC48660.2019.9062827

## Description

### FIELD OF TECHNOLOGY

The following relates generally to wireless communications and more specifically to dynamic sensor-sharing with confidence requirements.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Some wireless systems may support vehicle to everything (V2X) communications using one or more wireless communication links (e.g., communications over a sidelink), where a UE may discover and communicate with other nearby UEs on allocated resources. For example, UEs may communication sensor data about a UE's environment via a sensor sharing message on a wireless communication link. In dense environments with multiple vehicles and multiple objects (e.g., pedestrians and cyclists), the volume of sensor sharing messages received by a V2X UE (e.g., a vehicle) may be large. As a result, improved techniques may be desired to reduce the number of sensor sharing messages to reduce over-the-air congestion and the processing burden on receiving V2X entities.

WO2018/236736A1 discloses various aspects of the disclosure relate to sharing vehicle sensor information. In some aspects, a requestor (e.g., a first vehicle) may transmit a request for vehicle sensor information. A responder (e.g., a second vehicle) may then respond with information sensed by the responder. For example, a requestor may unicast a vehicle-to-anything (V2X) message that requests a particular responder to share specified sensor information. As another example, a requestor may broadcast a vehicle-to-anything (V2X) message that requests any responder that meets a response criterion (or response criteria) to share specified sensor information.

US2017118620A1 discloses methods, a network node and a second device for managing values of a physical quantity are disclosed. The second device is associated with a second receiver device. The network node receives, from the first wireless device, a first value, obtained by a first sensor associated with the first wireless device. The network node receives first and second information about mobility from the first wireless device and the second device, respectively. The network node determines a surrogate value based on at least the first value, when the first information and the second information are within a range for considering the first and second information to be equivalent. The network node sends the surrogate value to the second receiver device.

### SUMMARY

The invention is described herein with reference to the appended claims.

### BRIEF DESCRIPTION OF THE DRAWINGS

FIG. 1 illustrates an example of a wireless communications system that supports dynamic sensor-sharing with confidence requirements in accordance with aspects of the present disclosure.
FIG. 2 illustrates an example of a wireless communications system that supports dynamic sensor-sharing with confidence requirements in accordance with aspects of the present disclosure.
FIG. 3 illustrates an example of an application-layer message that supports dynamic sensor-sharing with confidence requirements in accordance with aspects of the present disclosure.
FIG. 4 illustrates an example of an application-layer message that supports dynamic sensor-sharing with confidence requirements in accordance with aspects of the present disclosure.
FIG. 5 illustrates an example of a process flow that supports dynamic sensor-sharing with confidence requirements in accordance with aspects of the present disclosure.
FIGs. 6 and 7 show block diagrams of devices that support dynamic sensor-sharing with confidence requirements in accordance with aspects of the present disclosure.
FIG. 8 shows a block diagram of a communications manager that supports dynamic sensor-sharing with confidence requirements in accordance with aspects of the present disclosure.
FIG. 9 shows a diagram of a system including a device that supports dynamic sensor-sharing with confidence requirements in accordance with aspects of the present disclosure.
FIGs. 10 through 15 show flowcharts illustrating methods that support dynamic sensor-sharing with confidence requirements in accordance with aspects of the present disclosure.

### DETAILED DESCRIPTION

Wireless communication systems may include or support networks used for vehicle based communications, also referred to as vehicle-to-everything (V2X) networks, vehicle-to-vehicle (V2V) networks, cellular V2X (CV2X) networks, or other similar networks. Some vehicles may be manufactured to support V2X and are equipped with numerous sensors including cameras, radar, lidar and ultrasound. These sensors may be used to detect the environment around the car, including other vehicles, obstacles, and non-vehicle road users (e.g., pedestrians and cyclists), which may also be referred to as a vulnerable road user (VRU). A vehicle, which may also be referred to herein as a user equipment (UE) may follow application-layer protocols for V2X sensor-sharing. Sensor sharing between UEs may include the dissemination of detected vehicles and/or objects by the sensors on one or more UEs. Each instance of a detected object included in a sensor-sharing message may include information regarding the accuracy or confidence with which a measuring UE sensed the detected object. In dense environments with large numbers of vehicles and objects, the volume of sensor sharing messages received by a UE may be large. Additionally, since multiple UEs may detect the same vehicle or object, the number of messages containing descriptions of the same detected vehicle or object received by a UE may also be very large. Thus, current sensor sharing methods cause over-the-air congestion and a processing burden on receiving UEs.

According to the techniques described herein, a V2X UE may indicate, to other V2X UEs, a level of accuracy it can accept for a detected vehicle or object included in a reported sensor sharing message from another UE. The minimum level of accuracy information may be specific and include the type of sensor used to detect the object (e.g., camera, radar, or lidar), or may be general to the vehicle or object characteristics. A minimum confidence may be indicated for each of the size, speed, location, and angular velocity of a vehicle, VRU (e.g., pedestrians and cyclists), or object (e.g., a sign or road obstruction). The application of these confidence thresholds may allow measuring UEs to exclude at least a portion of sensor data in sensor-sharing messages if the sensor data does not meet the accuracy level requested by the receiving UE.

The receiving UE may signal the one or more accuracy thresholds in an information element (IE) to the measuring UE. The IE may include data fields and data elements defining the one or more thresholds and may be augmented to existing application-layer messages or sent independently as part of a new message. The use of the described accuracy or confidence threshold may improve communication quality by reducing the transmission of unnecessary data and reducing over-the-air congestion.

Aspects of the disclosure are initially described in the context of wireless communications systems. Aspects of the disclosure are further illustrated by and described with reference to apparatus diagrams, system diagrams, and flowcharts that relate to dynamic sensor-sharing with confidence requirements.

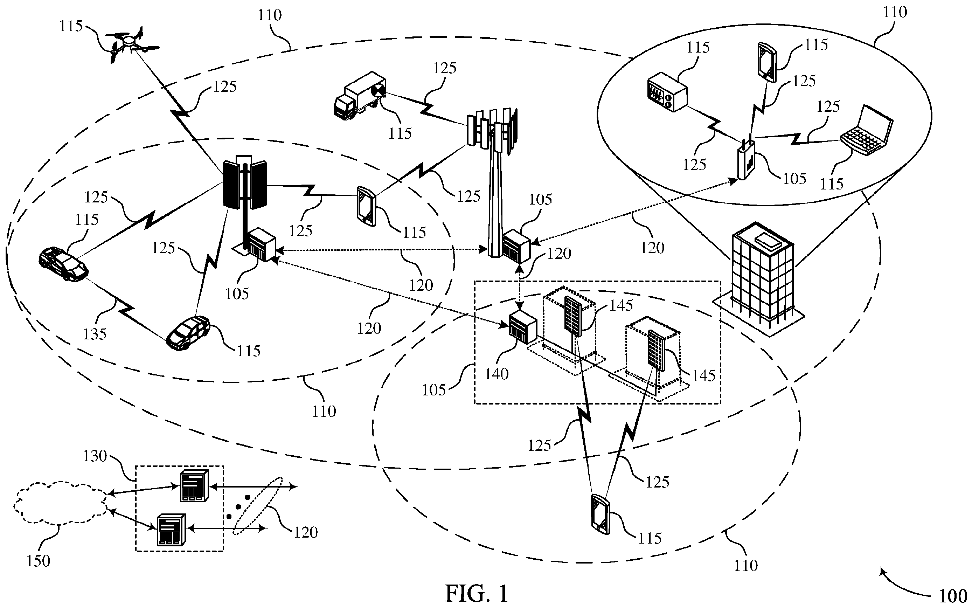

**FIG. 1** illustrates an example of a wireless communications system 100 that supports dynamic sensor-sharing with confidence requirements in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to the network operators IP services 150. The operators IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

In some examples, a receiving UE 115 (e.g., V2X entity) may identify a measurement accuracy threshold associated with reporting a sensor measurement over a wireless communication link 125 or 135 to the receiving UE 115. The receiving UE 115 may then transmit, to a measuring UE 115, a configuration indicating the measurement accuracy threshold (e.g., a vehicle threshold, a VRU threshold, or an object threshold) for reporting to the receiving UE 115. The configuration may be transmitted to a base station 105 via a wireless communication link 125. Additionally or alternatively, the configuration may be transmitted over a wireless communication link 135 directly to the measuring UE 115. The measuring UE 115 may make sensor measurements and identify measurement data that satisfies the measurement accuracy threshold based on the received configuration. The measuring UE 115 may then transmit, over a wireless communication link 125 indirectly to the receiving UE 115 via a base station 105 or over a wireless communication link 135 directly to the receiving UE 115, the subset of measurement data that satisfies the measurement accuracy threshold. The measuring UE 115 may refrain from transmitting a different subset of measurement data that does not satisfy the measurement accuracy threshold.

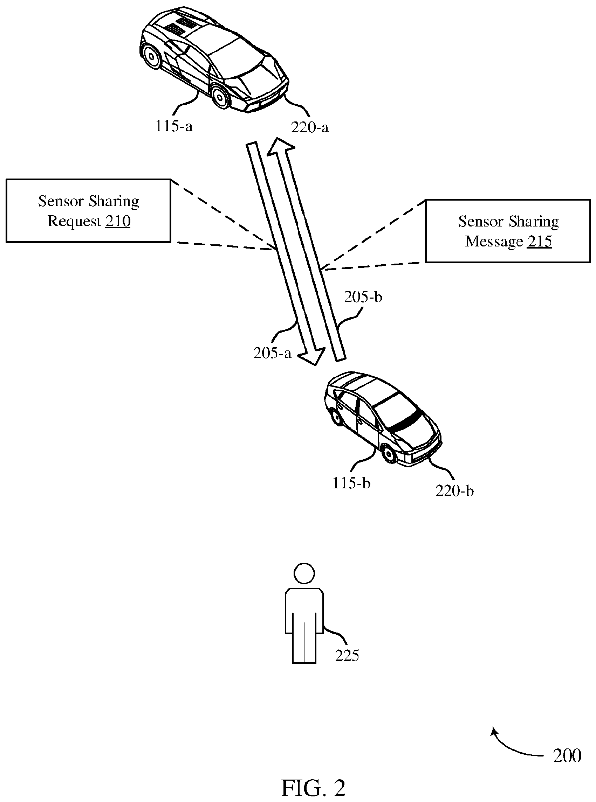

**FIG.** 2 illustrates an example of a wireless communications system 200 that supports dynamic sensor-sharing with confidence requirements in accordance with aspects of the present disclosure. In some examples, wireless communications system 200 may implement aspects of wireless communication system 100. Wireless communications system 200 may include UEs 115-a and 115-b, which may be examples of a UE 115, as described with reference to FIG. 1. UEs 115-a and 115-b may support dynamic sensor-sharing with confidence requirements on a first wireless link 205-a and a second wireless link 205-b (e.g., sidelinks).

In wireless communications system 200, UE 115-a may communicate with UE 115-b (e.g., a data transmission) using the V2X network (e.g., sidelink communication via CV2X) via a first wireless link 205-a and a second wireless link 205-b. In another example, UE 115-a may communicate with UE 115-b via a network based communication through a base station (not shown). UE 115-a and UE 115-b may be configured with one or more sensors 220 and may be capable of sharing sensor data. In some examples, UE 115-b may be a road side unit (RSU).

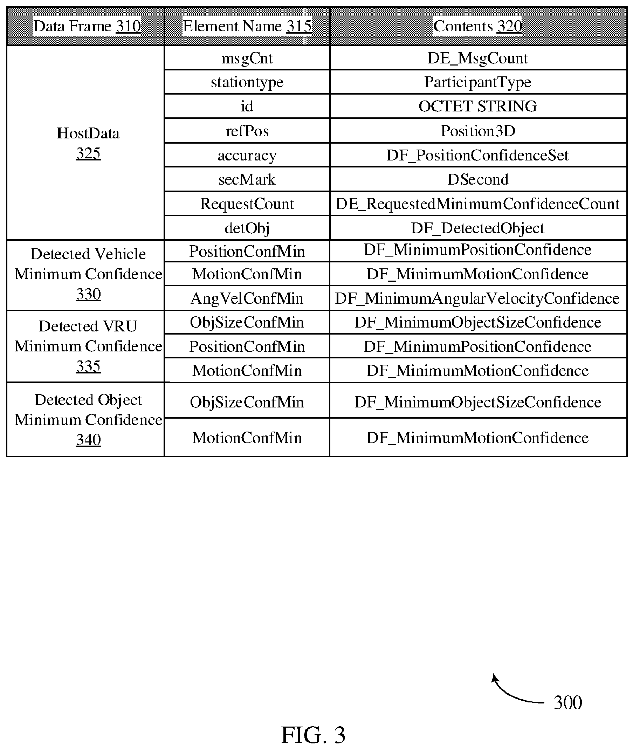

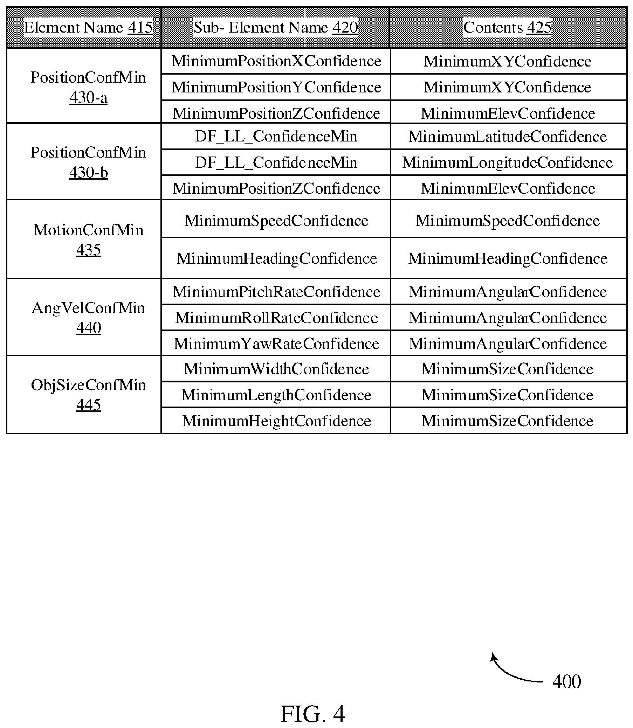

UE 115-a may transmit a sensor sharing request 210 to UE 115-b via link 205-a. The sensor sharing request 210 may include an indication of one or more minimum confidence requests for the reporting of sensor data to UE 115-a from UE 115-b. The sensor sharing request 210 may include IEs that may be used to specify required confidence values for categories of detected objects (e.g., pedestrian 225). The IEs are described in greater detail with respect to FIGs. 3 and 4. In some examples, a confidence value may be specified for the detected speed (e.g., greater than X meters per second), location (greater than Y meters or N degrees), angular velocity (e.g., greater than M degrees per second), or some combination thereof for objects sensed by sensor 220-b of UE 115-b. In some examples, the sensor sharing request 210 may be a broadcast, groupcast, or unicast transmission. The transmission of a sensor sharing message 215 via link 205-b may be dependent on the required confidence values.

In some cases, the UE 115-a may transmit a sensor sharing request 210 specific to the pedestrian 225 based on sensor 220-a measurements detected with an accuracy at UE 115-a of the pedestrian 225 (e.g., a VRU). For example, if the accuracy of the pedestrian 225 measurement taken at UE 115-a is above a threshold, then the UE 115-a may transmit the sensor sharing request 210 indicating not to share sensor data of the pedestrian 225 unless the data is more accurate than UE 115-a already detected. In other examples, the sensor sharing request 210 may include one or more thresholds generic to vehicles, objects, or VRUs.

Based on receiving the sensor sharing request 210, UE 115-b may configure an evaluation of the measurement data from sensor 220-b that filters data based on the indicated one or more thresholds. For example, UE 115-b may be closer to the pedestrian 225 and thus be capable of a highly accurate (e.g., 95% accurate) size measurement of the pedestrian 225. If the threshold indicated by UE 115-a is less than the measured accuracy (e.g., 90%), then the UE 115-b may transmit the measurement data of the pedestrian 225 in sensor sharing message 215 to UE 115-a via link 205-b. If the threshold indicated by UE 115-a is greater than the measured accuracy (e.g., 98%), then the UE 115-b may not transmit the measurement data of the pedestrian 225 in sensor sharing message 215 to UE 115-a via link 205-b. In some examples, one or more detected objects may be evaluated for sensor sharing at UE 115-b.

In some cases, the set of measurement type thresholds may include one or more of a vehicle accuracy threshold, an object accuracy threshold, or a vulnerable road user accuracy threshold. In some cases, the set of measurement type thresholds include one or more of a velocity accuracy threshold, a size accuracy threshold, a location accuracy threshold, or an angular velocity accuracy threshold. The sensed measurement data at UE 115-b may be reported as measurements relative to UE 115-b, where UE 115-b indicates its absolute location to UE 115-a, or another point of reference.

**FIG.** 3 illustrates an example of an application-layer message 300 that supports dynamic sensor-sharing with confidence requirements in accordance with aspects of the present disclosure. In some examples, the application-layer message 300 may implement aspects of wireless communication system 100. The application-layer message 300 may be an example of a sensor sharing request configuration such as sensor sharing request message 210 with respect to FIG. 2.

The application-layer message 300 may be transmitted by a receiving UE 115 to one or more measuring UEs 115. The application-layer message 300 may include a number of IEs such as data frame 310, element name 315, and contents 320. For example, the data frames 310 may include HostData 325 and one or more of a Detected Vehicle Minimum Confidence 330, Detected VRU Minimum Confidence 335, or Detected Object Minimum Confidence 340. Each data frame 310 may include one or more elements with element name 315. Additionally, each element name 315 may be associated with contents 320, which may be a data frame or data element.

The HostData 325 data frame may include information specific to the host entity (e.g., receiving UE 115). For example, HostData 325 may include identifying information of itself such as msgCnt (e.g., sequence number), stationtype (e.g., transmitter type: unknown, motor, non-motor, pedestrian, RSU, or other), id (e.g., transmitter ID), refPos (transmitter latitude, longitude, and elevation), accuracy (e.g., transmitter latitude, longitude, and elevation confidence), and secMark (e.g., time of message generation). The HostData 325 data frame may also include accuracy threshold information such as RequestCount (e.g., a number of threshold requests included in the message) and detObj (e.g., a sequence of objects detected by the receiving UE 115).

As shown in FIG. 3, there may be three threshold requests associated with different measurement types included in the message, which may be Detected Vehicle Minimum Confidence 330, Detected VRU Minimum Confidence 335, and Detected Object Minimum Confidence 340. Alternatively, RequestCount may be set to eight, as there may be one or more thresholds within each of Detected Vehicle Minimum Confidence 330, Detected VRU Minimum Confidence 335, and Detected Object Minimum Confidence 340. For example, Detected Vehicle Minimum Confidence 330 may include one or more of a PositionConfMin, MotionConfMin, or AngVelConfMin. Detected VRU Minimum Confidence 335 may include one or more of an ObjSizeConfMin, PositionConfMin, or MotionConfMin. Detected Object Minimum Confidence 340 may include one or both of an ObjSizeConfMin or MotionConfMin. These confidence minimum thresholds are described with greater detail in FIG. 4.

**FIG. 4** illustrates an example of an application-layer message 400 that supports dynamic sensor-sharing with confidence requirements in accordance with aspects of the present disclosure. In some examples, the application-layer message 400 may implement aspects of wireless communication system 100. The application-layer message 400 may be included in a sensor sharing request configuration such as sensor sharing request message 210 with respect to FIG. 2 or application-layer message 300 with respect to FIG. 3.

Application layer message 400 may include one or more data frame elements with element name 415. Additionally, each element name 415 may be associated with one or more sub-elements with sub-element name 420. Each sub-element name 420 may be associated with a specific contents 425. As described with respect to FIG. 3, a sensor sharing request configuration may include minimum accuracy thresholds for one or more measurement types. For example, minimum accuracy thresholds may be included for detected vehicles, VRUs, and objects. In some cases, a set of measurement type thresholds include one or more of a velocity or motion accuracy threshold (e.g., MotionConfMin 435), a size accuracy threshold (e.g., ObjSizeConfMin 445), a location or position accuracy threshold (e.g., PositionConfMin 430), or an angular velocity accuracy threshold (e.g., AngVelConfMin 440).

In some cases, the location accuracy threshold indicates a minimum accuracy for one or more of a latitude of an object, a longitude of the object, or an elevation of the object. In some cases, the location accuracy threshold indicates a minimum accuracy for one or more distance measurements of an object with respect to the second UE. As shown in FIG. 4, there may be two options for requesting a location or position accuracy threshold, Cartesian coordinates (i.e. X, Y, and Z) as shown in PositionConfMin 430-a or latitude, longitude, and elevation coordinates as shown in PositionConfMin 430-b. The coordinates of both options may be relative or absolute. Element PositionConfMin 430-a may include one or more sub-elements of MinimumPositionXConfidence, MinimumPositionYConfidence, and MinimumPositionZConfidence. Element PositionConfMin 430-b may include one or more sub-elements of DF_LL_ConfidenceMin for latitude, DF_LL_ConfidenceMin for longitude, and MinimumPositionZConfidence for elevation.

In some cases, the velocity accuracy threshold indicates a minimum accuracy for one or both of a speed of an object or a heading of the object. As shown in FIG. 4, the velocity accuracy threshold may be indicated in MotionConfMin 435 element. MotionContMin 435 element may include one or both of MinimumSpeedConfidence, which may be given in units of length over time, and MinimumHeadingConfidence, which may be given in units of degrees.

In some cases, the angular velocity accuracy threshold indicates a minimum accuracy for one or more of a pitch rate of change of an object, a roll rate of change of the object, or a yaw rate of change of the object. As shown in FIG. 4, the velocity accuracy threshold may be indicated in AngVelConfMin 440 element. AngVelConfMin 440 may include one or more of MinimumPitchRateConfidence, MinimumRollRateConfidence, and MinimumYawRateConfidence. Each of these angular velocity sub-elements may be given in units of degrees over time.

In some cases, the size accuracy threshold indicates a minimum accuracy for one or more of a width of an object, a length of the object, or a height of the object. As shown in FIG. 4, the velocity accuracy threshold may be indicated in ObjSizeConfMin 445 element. ObjSizeConfMin 445 element may include one or more of MinimumWidthConfidence, MinimumLengthConfidence, and MinimumHeightConfidence. Each of these object size sub-elements may be given in units of length (e.g., meters).

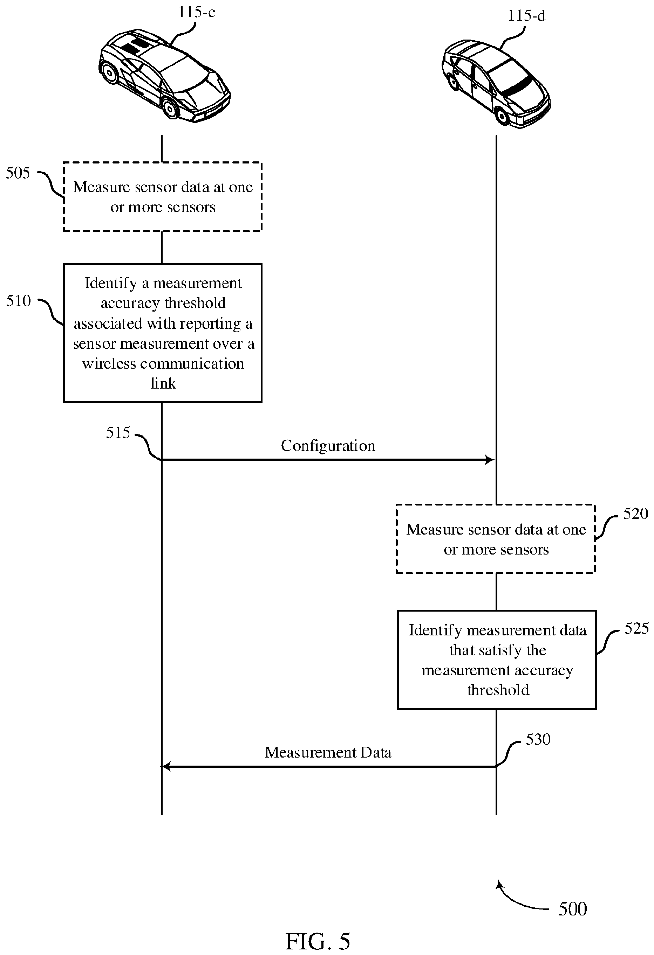

**FIG. 5** illustrates an example of a process flow 500 that supports dynamic sensor-sharing with confidence requirements in accordance with aspects of the present disclosure. In some examples, process flow 500 may implement aspects of wireless communication system 100. may implement aspects of wireless communications systems 100 and/or 200. Process flow 500 may include UE 115-c and UE 115-d, which may be examples UEs 115 as described herein with reference to FIGs. 1-3. For example, UE 115-c may be an example of UE 115-a as described herein with reference to FIG. 2, and UE 115-d may be an example of UE 115-b as described herein with reference to FIG. 2. In some examples, UE 115-c and UE 115-d may communicate indirectly through one or more base stations 105.

In the following description of the process flow 500, the operations between UE 115-c and UE 115-d may be transmitted in a different order than the order shown, or the operations performed by UE 115-c and UE 115-d may be performed in different orders or at different times. Certain operations may also be left out of the process flow 500, or other operations may be added to the process flow 500. It is to be understood that while UE 115-c and UE 115-d are shown performing a number of the operations of process flow 500, any wireless device may perform the operations shown.

At 505, UE 115-c may measure sensor data of the one or more measurement types at one or more sensors of the UE 115-c, where the sensor data is associated with an accuracy.

At 510, UE 115-c may identify a measurement accuracy threshold associated with reporting a sensor measurement over a wireless communication link to the UE 115-c. In some cases, the UE115-c may identify a set of measurement type thresholds each associated with reporting the one or more measurement types over the wireless communication link. In some examples, the measurement accuracy threshold may be set based on the measurement at 505.

In some cases, the set of measurement type thresholds include one or more of a vehicle accuracy threshold, an object accuracy threshold, or a vulnerable road user accuracy threshold. In some cases, the set of measurement type thresholds include one or more of a velocity accuracy threshold, a size accuracy threshold, a location accuracy threshold, or an angular velocity accuracy threshold. In some cases, the velocity accuracy threshold indicates a minimum accuracy for one or both of a speed of an object or a heading of the object. In some cases, the size accuracy threshold indicates a minimum accuracy for one or more of a width of an object, a length of the object, or a height of the object. In some cases, the location accuracy threshold indicates a minimum accuracy for one or more of a latitude of an object, a longitude of the object, or an elevation of the object. In some cases, the location accuracy threshold indicates a minimum accuracy for one or more distance measurements of an object with respect to the second UE. In some cases, the angular velocity accuracy threshold indicates a minimum accuracy for one or more of a pitch rate of change of an object, a roll rate of change of the object, or a yaw rate of change of the object.

At 515, UE 115-c may transmit and UE 115-d may receive a configuration indicating the measurement accuracy threshold for the UE 115-c for one or more measurement types. In some cases, the UE 115-c may transmit the configuration indicating the measurement accuracy threshold for the one or more measurement types based on the measured sensor data and the associated accuracy from 505.

At 520, UE 115-d may measure sensor data of the one or more measurement types at one or more sensors of the UE 115-d, where the sensor data is associated with an accuracy.

At 525, UE 115-d may identify measurement data that satisfy the measurement accuracy threshold for the one or more measurement types according to the configuration received at 515. In some examples, the UE 115-d may identify a subset of the sensor data from 520 associated with the accuracy that satisfies the measurement accuracy threshold according to the configuration, where the measurement data is the subset of the sensor data.

At 530, UE 115-d may transmit and UE 115-c may receive, over the wireless communication link, measurement data that satisfies the measurement accuracy threshold according to the configuration at 515.

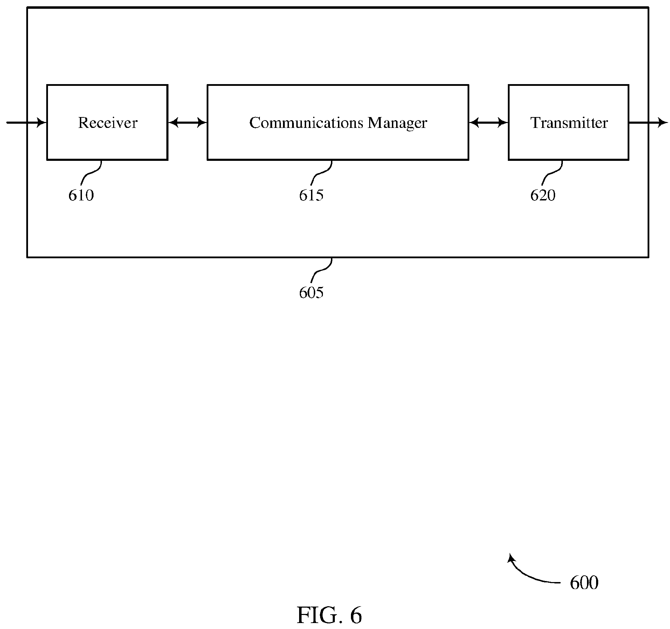

**FIG. 6** shows a block diagram 600 of a device 605 that supports dynamic sensor-sharing with confidence requirements in accordance with aspects of the present disclosure. The device 605 may be an example of aspects of a UE 115 as described herein. The device 605 may include a receiver 610, a communications manager 615, and a transmitter 620. The device 605 may also include a processor. Each of these components may be in communication with one another (e.g., via one or more buses).

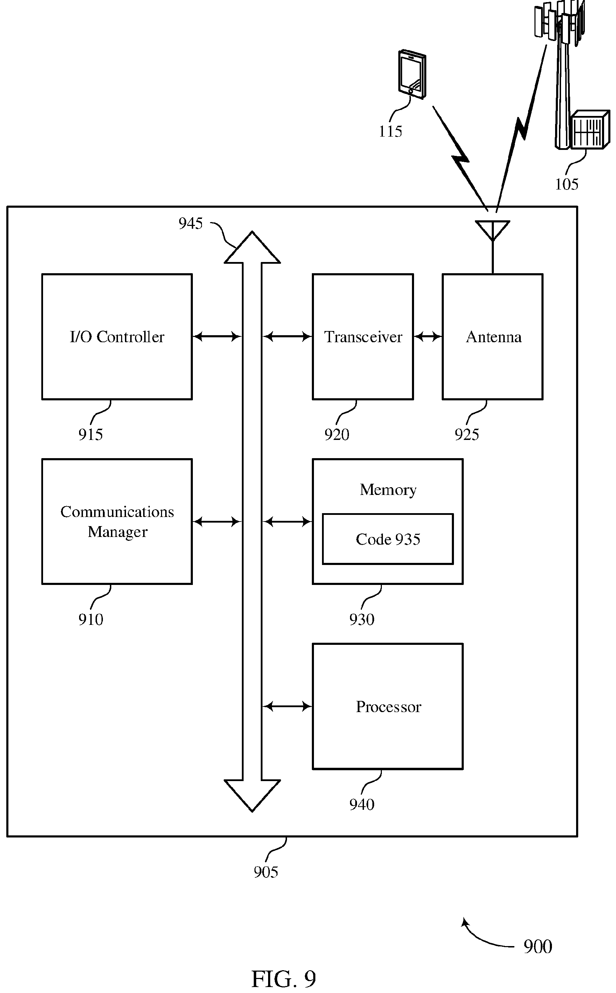

The receiver 610 may receive information such as packets, user data, or control information associated with various information channels (e.g., control channels, data channels, and information related to dynamic sensor-sharing with confidence requirements, etc.). Information may be passed on to other components of the device 605. The receiver 610 may be an example of aspects of the transceiver 920 described with reference to FIG. 9. The receiver 610 may utilize a single antenna or a set of antennas.

The communications manager 615 may identify a measurement accuracy threshold associated with reporting a sensor measurement over a wireless communication link to the first UE, transmit a configuration indicating the measurement accuracy threshold for the first UE for one or more measurement types, and receive, from a second UE over the wireless communication link, measurement data that satisfies the measurement accuracy threshold according to the configuration. The communications manager 615 may also receive a configuration indicating a measurement accuracy threshold for one or more measurement types associated with reporting a sensor measurement over a wireless communication link to a second UE, identify measurement data that satisfy the measurement accuracy threshold for the one or more measurement types according to the configuration, and transmit, to the second UE, the measurement data that satisfies the measurement accuracy threshold based on the identifying. The communications manager 615 may be an example of aspects of the communications manager 910 described herein.

The communications manager 615, or its sub-components, may be implemented in hardware, code (e.g., software or firmware) executed by a processor, or any combination thereof. If implemented in code executed by a processor, the functions of the communications manager 615, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 615, or its sub-components, may be physically located at various positions, including being distributed such that portions of functions are implemented at different physical locations by one or more physical components. In some examples, the communications manager 615, or its sub-components, may be a separate and distinct component in accordance with various aspects of the present disclosure. In some examples, the communications manager 615, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 620 may transmit signals generated by other components of the device 605. In some examples, the transmitter 620 may be collocated with a receiver 610 in a transceiver module. For example, the transmitter 620 may be an example of aspects of the transceiver 920 described with reference to FIG. 9. The transmitter 620 may utilize a single antenna or a set of antennas.

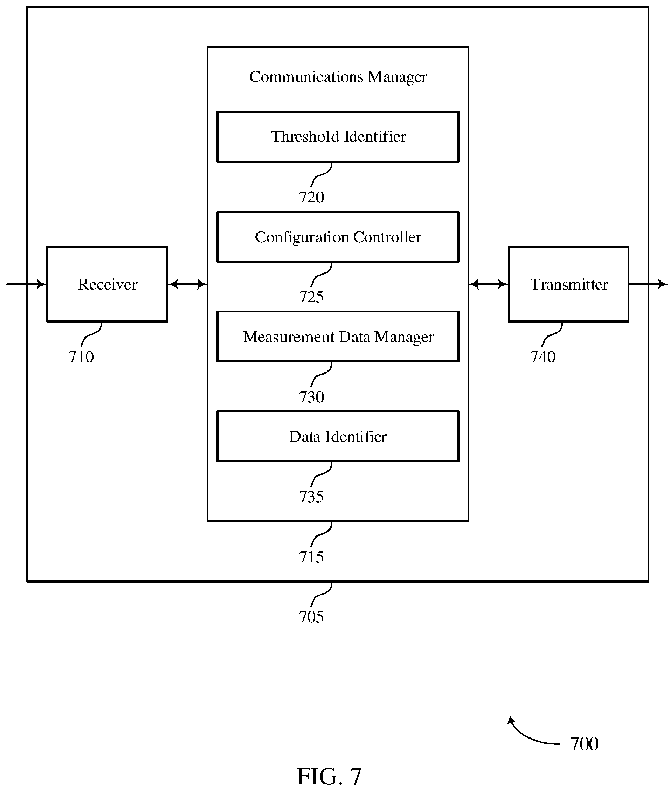

**FIG. 7** shows a block diagram 700 of a device 705 that supports dynamic sensor-sharing with confidence requirements in accordance with aspects of the present disclosure. The device 705 may be an example of aspects of a device 605, or a UE 115 as described herein. The device 705 may include a receiver 710, a communications manager 715, and a transmitter 740. The device 705 may also include a processor. Each of these components may be in communication with one another (e.g., via one or more buses).

The receiver 710 may receive information such as packets, user data, or control information associated with various information channels (e.g., control channels, data channels, and information related to dynamic sensor-sharing with confidence requirements, etc.). Information may be passed on to other components of the device 705. The receiver 710 may be an example of aspects of the transceiver 920 described with reference to FIG. 9. The receiver 710 may utilize a single antenna or a set of antennas.

The communications manager 715 may be an example of aspects of the communications manager 615 as described herein. The communications manager 715 may include a threshold identifier 720, a configuration controller 725, a measurement data manager 730, and a data identifier 735. The communications manager 715 may be an example of aspects of the communications manager 910 described herein.

The threshold identifier 720 may identify a measurement accuracy threshold associated with reporting a sensor measurement over a wireless communication link to the first UE.

The configuration controller 725 may transmit a configuration indicating the measurement accuracy threshold for the first UE for one or more measurement types. The configuration controller 725 may receive a configuration indicating a measurement accuracy threshold for one or more measurement types associated with reporting a sensor measurement over a wireless communication link to a second UE.

The measurement data manager 730 may receive, from a second UE over the wireless communication link, measurement data that satisfies the measurement accuracy threshold according to the configuration. The measurement data manager 730 may transmit, to the second UE, the measurement data that satisfies the measurement accuracy threshold based on the identifying.

The data identifier 735 may identify measurement data that satisfy the measurement accuracy threshold for the one or more measurement types according to the configuration.

The transmitter 740 may transmit signals generated by other components of the device 705. In some examples, the transmitter 740 may be collocated with a receiver 710 in a transceiver module. For example, the transmitter 740 may be an example of aspects of the transceiver 920 described with reference to FIG. 9. The transmitter 740 may utilize a single antenna or a set of antennas.

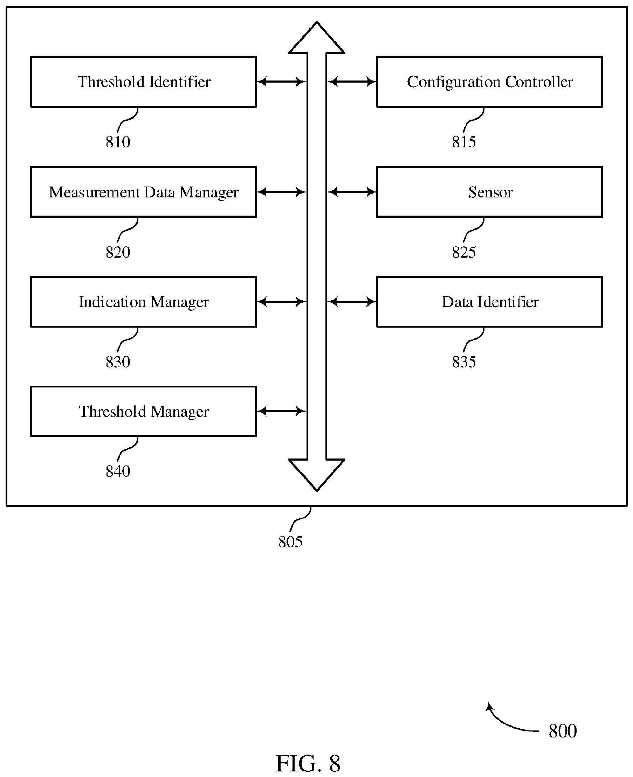

**FIG. 8** shows a block diagram 800 of a communications manager 805 that supports dynamic sensor-sharing with confidence requirements in accordance with aspects of the present disclosure. The communications manager 805 may be an example of aspects of a communications manager 615, a communications manager 715, or a communications manager 910 described herein. The communications manager 805 may include a threshold identifier 810, a configuration controller 815, a measurement data manager 820, a sensor 825, an indication manager 830, a data identifier 835, and a threshold manager 840. Each of these modules may communicate, directly or indirectly, with one another (e.g., via one or more buses).

The threshold identifier 810 may identify a measurement accuracy threshold associated with reporting a sensor measurement over a wireless communication link to the first UE. In some examples, the threshold identifier 810 may identify a set of measurement type thresholds each associated with reporting the one or more measurement types over the wireless communication link.

In some cases, the set of measurement type thresholds include one or more of a vehicle accuracy threshold, an object accuracy threshold, or a vulnerable road user accuracy threshold. In some cases, the set of measurement type thresholds include one or more of a velocity accuracy threshold, a size accuracy threshold, a location accuracy threshold, or an angular velocity accuracy threshold. In some cases, the velocity accuracy threshold indicates a minimum accuracy for one or both of a speed of an object or a heading of the object. In some cases, the size accuracy threshold indicates a minimum accuracy for one or more of a width of an object, a length of the object, or a height of the object. In some cases, the location accuracy threshold indicates a minimum accuracy for one or more of a latitude of an object, a longitude of the object, or an elevation of the object. In some cases, the location accuracy threshold indicates a minimum accuracy for one or more distance measurements of an object with respect to the second UE. In some cases, the angular velocity accuracy threshold indicates a minimum accuracy for one or more of a pitch rate of change of an object, a roll rate of change of the object, or a yaw rate of change of the object.

The configuration controller 815 may transmit a configuration indicating the measurement accuracy threshold for the first UE for one or more measurement types. In some examples, the configuration controller 815 may receive a configuration indicating a measurement accuracy threshold for one or more measurement types associated with reporting a sensor measurement over a wireless communication link to a second UE. In some examples, the configuration controller 815 may transmit the configuration indicating the measurement accuracy threshold for the one or more measurement types based on the measured sensor data and the associated accuracy. In some examples, the configuration controller 815 may transmit the configuration in an information element of a radio resource control message. In some examples, the configuration controller 815 may receive the configuration in an information element of a radio resource control message. In some cases, the configuration is transmitted periodically. In some cases, the one or more measurement types are each be associated with one or more sensor types. In some cases, the wireless communication link is a sidelink. In some cases, the first UE and the second UE are vehicle to everything entities, and where the sidelink includes a vehicle to everything channel. In some cases, the configuration is received periodically.

The measurement data manager 820 may receive, from a second UE over the wireless communication link, measurement data that satisfies the measurement accuracy threshold according to the configuration. In some examples, the measurement data manager 820 may transmit, to the second UE, the measurement data that satisfies the measurement accuracy threshold based on the identifying. In some cases, the measurement data includes a confidence indication for each measurement type. In some cases, the one or more measurement types are each be associated with one or more sensor types.

The sensor 825 may measure sensor data of the one or more measurement types at one or more sensors of the first UE, where the sensor data is associated with an accuracy. In some examples, the sensor 825 may measure sensor data of the one or more measurement types at one or more sensors of the first UE, where the sensor data is associated with an accuracy.

The indication manager 830 may receive an indication of the measurement accuracy threshold.

The data identifier 835 may identify measurement data that satisfy the measurement accuracy threshold for the one or more measurement types according to the configuration.

The threshold manager 840 may identify a subset of the sensor data associated with the accuracy that satisfies the measurement accuracy threshold according to the configuration, where the measurement data is the subset of the sensor data.

In some cases, the measurement accuracy threshold further includes a set of measurement type thresholds each associated with reporting the one or more measurement types over the wireless communication link. In some cases, the set of measurement type thresholds include one or more of a vehicle accuracy threshold, an object accuracy threshold, or a vulnerable road user accuracy threshold. In some cases, the set of measurement type thresholds include one or more of a velocity accuracy threshold, a size accuracy threshold, a location accuracy threshold, or an angular velocity accuracy threshold. In some cases, the velocity accuracy threshold indicates a minimum accuracy for one or both of a speed of an object or a heading of the object. In some cases, the size accuracy threshold indicates a minimum accuracy for one or more of a width of an object, a length of the object, or a height of the object. In some cases, the location accuracy threshold indicates a minimum accuracy for one or more of a latitude of an object, a longitude of the object, or an elevation of the object. In some cases, the location accuracy threshold indicates a minimum accuracy for one or more distance measurements of an object with respect to the first UE. In some cases, the angular velocity accuracy threshold indicates a minimum accuracy for one or more of a pitch rate of change of an object, a roll rate of change of the object, or a yaw rate of change of the object.

**FIG. 9** shows a diagram of a system 900 including a device 905 that supports dynamic sensor-sharing with confidence requirements in accordance with aspects of the present disclosure. The device 905 may be an example of or include the components of device 605, device 705, or a UE 115 as described herein. The device 905 may include components for bi-directional voice and data communications including components for transmitting and receiving communications, including a communications manager 910, an I/O controller 915, a transceiver 920, an antenna 925, memory 930, and a processor 940. These components may be in electronic communication via one or more buses (e.g., bus 945).

The communications manager 910 may identify a measurement accuracy threshold associated with reporting a sensor measurement over a wireless communication link to the first UE, transmit a configuration indicating the measurement accuracy threshold for the first UE for one or more measurement types, and receive, from a second UE over the wireless communication link, measurement data that satisfies the measurement accuracy threshold according to the configuration. The communications manager 910 may also receive a configuration indicating a measurement accuracy threshold for one or more measurement types associated with reporting a sensor measurement over a wireless communication link to a second UE, identify measurement data that satisfy the measurement accuracy threshold for the one or more measurement types according to the configuration, and transmit, to the second UE, the measurement data that satisfies the measurement accuracy threshold based on the identifying.

The I/O controller 915 may manage input and output signals for the device 905. The I/O controller 915 may also manage peripherals not integrated into the device 905. In some cases, the I/O controller 915 may represent a physical connection or port to an external peripheral. In some cases, the I/O controller 915 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 915 may represent or interact with a modem, a keyboard, a mouse, a touchscreen, or a similar device. In some cases, the I/O controller 915 may be implemented as part of a processor. In some cases, a user may interact with the device 905 via the I/O controller 915 or via hardware components controlled by the I/O controller 915.

The transceiver 920 may communicate bi-directionally, via one or more antennas, wired, or wireless links as described above. For example, the transceiver 920 may represent a wireless transceiver and may communicate bi-directionally with another wireless transceiver. The transceiver 920 may also include a modem to modulate the packets and provide the modulated packets to the antennas for transmission, and to demodulate packets received from the antennas.

In some cases, the wireless device may include a single antenna 925. However, in some cases the device may have more than one antenna 925, which may be capable of concurrently transmitting or receiving multiple wireless transmissions.

The memory 930 may include RAM and ROM. The memory 930 may store computer-readable, computer-executable code 935 including instructions that, when executed, cause the processor to perform various functions described herein. In some cases, the memory 930 may contain, among other things, a BIOS which may control basic hardware or software operation such as the interaction with peripheral components or devices.

The processor 940 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In other cases, a memory controller may be integrated into the processor 940. The processor 940 may be configured to execute computer-readable instructions stored in a memory (e.g., the memory 930) to cause the device 905 to perform various functions (e.g., functions or tasks supporting dynamic sensor-sharing with confidence requirements).

The code 935 may include instructions to implement aspects of the present disclosure, including instructions to support wireless communications. The code 935 may be stored in a non-transitory computer-readable medium such as system memory or other type of memory. In some cases, the code 935 may not be directly executable by the processor 940 but may cause a computer (e.g., when compiled and executed) to perform functions described herein.

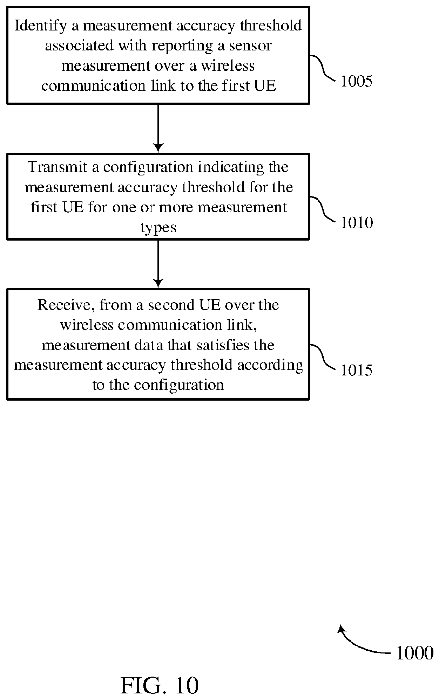

**FIG. 10** shows a flowchart illustrating a method 1000 that supports dynamic sensor-sharing with confidence requirements in accordance with aspects of the present disclosure. The operations of method 1000 may be implemented by a UE 115 or its components as described herein. For example, the operations of method 1000 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1005, the UE may identify a measurement accuracy threshold associated with reporting a sensor measurement over a wireless communication link to the first UE. The operations of 1005 may be performed according to the methods described herein. In some examples, aspects of the operations of 1005 may be performed by a threshold identifier as described with reference to FIGs. 6 through 9.

At 1010, the UE may transmit a configuration indicating the measurement accuracy threshold for the first UE for one or more measurement types. The operations of 1010 may be performed according to the methods described herein. In some examples, aspects of the operations of 1010 may be performed by a configuration controller as described with reference to FIGs. 6 through 9.

At 1015, the UE may receive, from a second UE over the wireless communication link, measurement data that satisfies the measurement accuracy threshold according to the configuration. The operations of 1015 may be performed according to the methods described herein. In some examples, aspects of the operations of 1015 may be performed by a measurement data manager as described with reference to FIGs. 6 through 9.

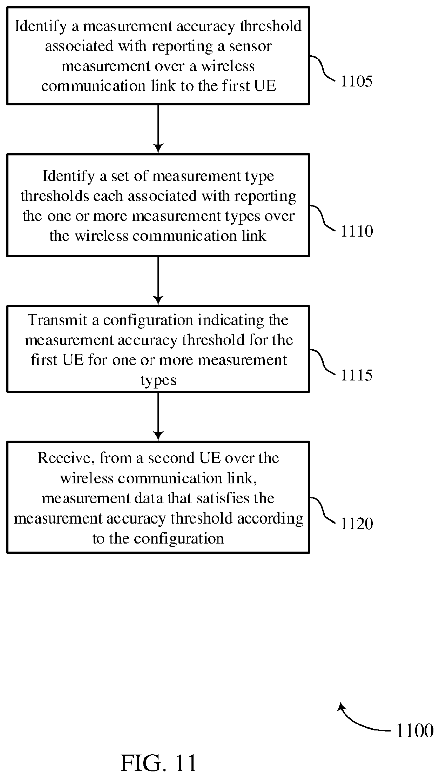

**FIG. 11** shows a flowchart illustrating a method 1100 that supports dynamic sensor-sharing with confidence requirements in accordance with aspects of the present disclosure. The operations of method 1100 may be implemented by a UE 115 or its components as described herein. For example, the operations of method 1100 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1105, the UE may identify a measurement accuracy threshold associated with reporting a sensor measurement over a wireless communication link to the first UE. The operations of 1105 may be performed according to the methods described herein. In some examples, aspects of the operations of 1105 may be performed by a threshold identifier as described with reference to FIGs. 6 through 9.

At 1110, the UE may identify a set of measurement type thresholds each associated with reporting the one or more measurement types over the wireless communication link. The operations of 1110 may be performed according to the methods described herein. In some examples, aspects of the operations of 1110 may be performed by a threshold identifier as described with reference to FIGs. 6 through 9.

At 1115, the UE may transmit a configuration indicating the measurement accuracy threshold for the first UE for one or more measurement types. The operations of 1115 may be performed according to the methods described herein. In some examples, aspects of the operations of 1115 may be performed by a configuration controller as described with reference to FIGs. 6 through 9.

At 1120, the UE may receive, from a second UE over the wireless communication link, measurement data that satisfies the measurement accuracy threshold according to the configuration. The operations of 1120 may be performed according to the methods described herein. In some examples, aspects of the operations of 1120 may be performed by a measurement data manager as described with reference to FIGs. 6 through 9.

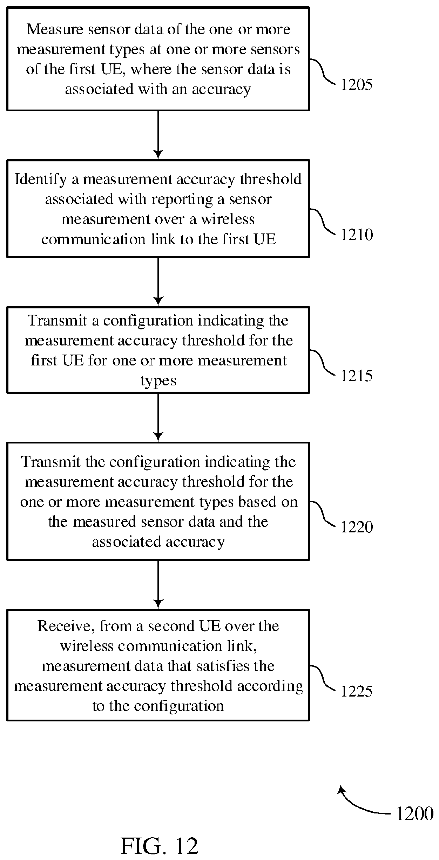

**FIG. 12** shows a flowchart illustrating a method 1200 that supports dynamic sensor-sharing with confidence requirements in accordance with aspects of the present disclosure. The operations of method 1200 may be implemented by a UE 115 or its components as described herein. For example, the operations of method 1200 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1205, the UE may measure sensor data of the one or more measurement types at one or more sensors of the first UE, where the sensor data is associated with an accuracy. The operations of 1205 may be performed according to the methods described herein. In some examples, aspects of the operations of 1205 may be performed by a sensor as described with reference to FIGs. 6 through 9.

At 1210, the UE may identify a measurement accuracy threshold associated with reporting a sensor measurement over a wireless communication link to the first UE. The operations of 1210 may be performed according to the methods described herein. In some examples, aspects of the operations of 1210 may be performed by a threshold identifier as described with reference to FIGs. 6 through 9.

At 1215, the UE may transmit a configuration indicating the measurement accuracy threshold for the first UE for one or more measurement types. The operations of 1215 may be performed according to the methods described herein. In some examples, aspects of the operations of 1215 may be performed by a configuration controller as described with reference to FIGs. 6 through 9.

At 1220, the UE may transmit the configuration indicating the measurement accuracy threshold for the one or more measurement types based on the measured sensor data and the associated accuracy. The operations of 1220 may be performed according to the methods described herein. In some examples, aspects of the operations of 1220 may be performed by a configuration controller as described with reference to FIGs. 6 through 9.

At 1225, the UE may receive, from a second UE over the wireless communication link, measurement data that satisfies the measurement accuracy threshold according to the configuration. The operations of 1225 may be performed according to the methods described herein. In some examples, aspects of the operations of 1225 may be performed by a measurement data manager as described with reference to FIGs. 6 through 9.

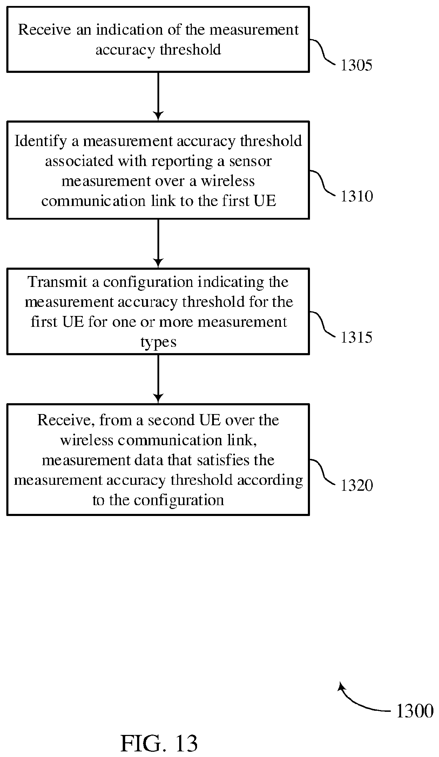

**FIG. 13** shows a flowchart illustrating a method 1300 that supports dynamic sensor-sharing with confidence requirements in accordance with aspects of the present disclosure. The operations of method 1300 may be implemented by a UE 115 or its components as described herein. For example, the operations of method 1300 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1305, the UE may receive an indication of the measurement accuracy threshold. The operations of 1305 may be performed according to the methods described herein. In some examples, aspects of the operations of 1305 may be performed by an indication manager as described with reference to FIGs. 6 through 9.

At 1310, the UE may identify a measurement accuracy threshold associated with reporting a sensor measurement over a wireless communication link to the first UE. The operations of 1310 may be performed according to the methods described herein. In some examples, aspects of the operations of 1310 may be performed by a threshold identifier as described with reference to FIGs. 6 through 9.

At 1315, the UE may transmit a configuration indicating the measurement accuracy threshold for the first UE for one or more measurement types. The operations of 1315 may be performed according to the methods described herein. In some examples, aspects of the operations of 1315 may be performed by a configuration controller as described with reference to FIGs. 6 through 9.

At 1320, the UE may receive, from a second UE over the wireless communication link, measurement data that satisfies the measurement accuracy threshold according to the configuration. The operations of 1320 may be performed according to the methods described herein. In some examples, aspects of the operations of 1320 may be performed by a measurement data manager as described with reference to FIGs. 6 through 9.

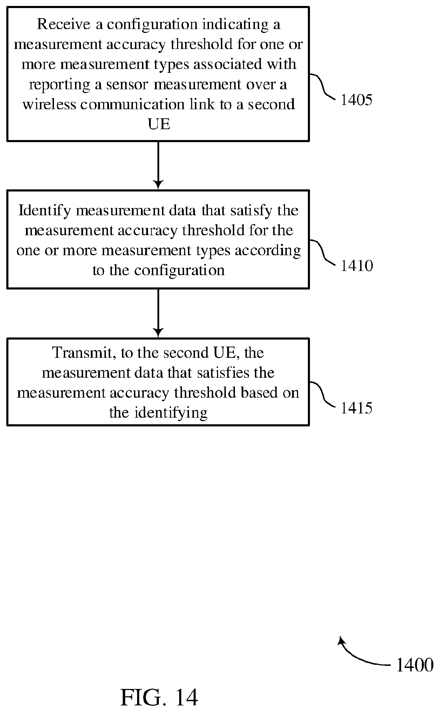

**FIG. 14** shows a flowchart illustrating a method 1400 that supports dynamic sensor-sharing with confidence requirements in accordance with aspects of the present disclosure. The operations of method 1400 may be implemented by a UE 115 or its components as described herein. For example, the operations of method 1400 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1405, the UE may receive a configuration indicating a measurement accuracy threshold for one or more measurement types associated with reporting a sensor measurement over a wireless communication link to a second UE. The operations of 1405 may be performed according to the methods described herein. In some examples, aspects of the operations of 1405 may be performed by a configuration controller as described with reference to FIGs. 6 through 9.

At 1410, the UE may identify measurement data that satisfy the measurement accuracy threshold for the one or more measurement types according to the configuration. The operations of 1410 may be performed according to the methods described herein. In some examples, aspects of the operations of 1410 may be performed by a data identifier as described with reference to FIGs. 6 through 9.

At 1415, the UE may transmit, to the second UE, the measurement data that satisfies the measurement accuracy threshold based on the identifying. The operations of 1415 may be performed according to the methods described herein. In some examples, aspects of the operations of 1415 may be performed by a measurement data manager as described with reference to FIGs. 6 through 9.

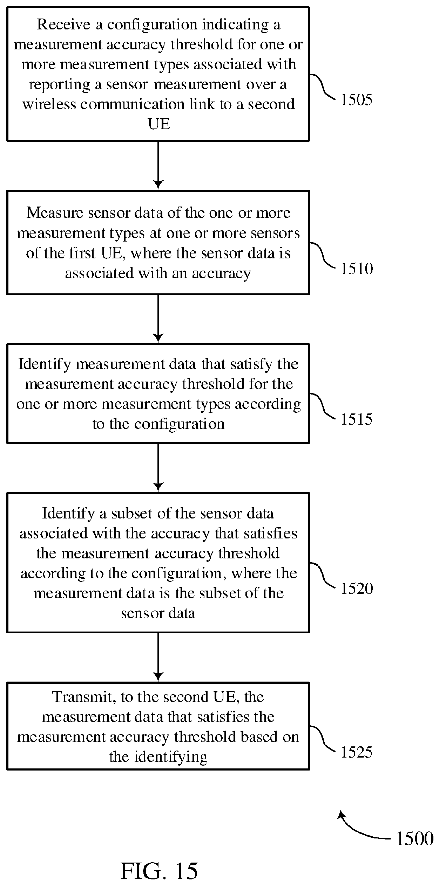

**FIG. 15** shows a flowchart illustrating a method 1500 that supports dynamic sensor-sharing with confidence requirements in accordance with aspects of the present disclosure. The operations of method 1500 may be implemented by a UE 115 or its components as described herein. For example, the operations of method 1500 may be performed by a communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1505, the UE may receive a configuration indicating a measurement accuracy threshold for one or more measurement types associated with reporting a sensor measurement over a wireless communication link to a second UE. The operations of 1505 may be performed according to the methods described herein. In some examples, aspects of the operations of 1505 may be performed by a configuration controller as described with reference to FIGs. 6 through 9.

At 1510, the UE may measure sensor data of the one or more measurement types at one or more sensors of the first UE, where the sensor data is associated with an accuracy. The operations of 1510 may be performed according to the methods described herein. In some examples, aspects of the operations of 1510 may be performed by a sensor as described with reference to FIGs. 6 through 9.

At 1515, the UE may identify measurement data that satisfy the measurement accuracy threshold for the one or more measurement types according to the configuration. The operations of 1515 may be performed according to the methods described herein. In some examples, aspects of the operations of 1515 may be performed by a data identifier as described with reference to FIGs. 6 through 9.

At 1520, the UE may identify a subset of the sensor data associated with the accuracy that satisfies the measurement accuracy threshold according to the configuration, where the measurement data is the subset of the sensor data. The operations of 1520 may be performed according to the methods described herein. In some examples, aspects of the operations of 1520 may be performed by a threshold manager as described with reference to FIGs. 6 through 9.

At 1525, the UE may transmit, to the second UE, the measurement data that satisfies the measurement accuracy threshold based on the identifying. The operations of 1525 may be performed according to the methods described herein. In some examples, aspects of the operations of 1525 may be performed by a measurement data manager as described with reference to FIGs. 6 through 9.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure as defined in the appended claims. Thus, the disclosure is not limited to the examples and designs described herein, but is to be accorded the broadest scope consistent with the scope of the appended claims.

## Claims

1. A method for wireless communications performed by a first user equipment UE (115-c), comprising:
identifying (1005,1105, 1210) a measurement accuracy threshold associated with reporting a sensor measurement over a wireless communication link to the first UE;
transmitting (1010,1115,1215) to a second UE over the wireless communication link, a configuration indicating the measurement accuracy threshold for the first UE for one or more measurement types; and
receiving (1015,1120,1225), from the second UE (115-d) over the wireless communication link, measurement data that satisfies the measurement accuracy threshold according to the configuration, wherein the measurement data is a subset of sensor data measured at the second UE that satisfies the measurement accuracy threshold.

2. The method of claim 1, wherein identifying the measurement accuracy threshold further comprises:
identifying (1110) a plurality of measurement type thresholds each associated with reporting the one or more measurement types over the wireless communication link.

3. The method of claim 2, wherein the plurality of measurement type thresholds comprises one or more of a vehicle accuracy threshold, an object accuracy threshold, or a vulnerable road user accuracy threshold.

4. The method of claim 2, wherein the plurality of measurement type thresholds comprises one or more of a velocity accuracy threshold, a size accuracy threshold, a location accuracy threshold, or an angular velocity accuracy threshold.

5. The method of claim 1, wherein transmitting the configuration indicating the measurement accuracy threshold further comprises:
measuring (1205) sensor data of the one or more measurement types at one or more sensors of the first UE, wherein the sensor data is associated with an accuracy; and
transmitting (1220) the configuration indicating the measurement accuracy threshold for the one or more measurement types based at least in part on the measured sensor data and the associated accuracy.

6. The method of claim 1, wherein the configuration is transmitted periodically.

7. The method of claim 1, wherein identifying the measurement accuracy threshold further comprises:
receiving an indication of the measurement accuracy threshold.

8. The method of claim 1, wherein transmitting the configuration indicating the measurement accuracy threshold further comprises:
transmitting the configuration in an information element of a radio resource control message.

9. The method of claim 1, wherein the one or more measurement types are each be associated with one or more sensor types.

10. The method of claim 1, wherein the measurement data comprises a confidence indication for each measurement type.

11. The method of claim 1, wherein the wireless communication link is a sidelink.

12. A method for wireless communications performed by a second user equipment UE (115-d), comprising:
receiving (1405,1505) over a wireless communication link from a first UE a configuration indicating a measurement accuracy threshold for one or more measurement types associated with reporting a sensor measurement over the wireless communication link to the first UE (115-c);
identifying (1410,1515) measurement data that satisfy the measurement accuracy threshold for the one or more measurement types according to the configuration, wherein the measurement data is a subset of sensor data measured at the second UE that satisfies the measurement accuracy threshold; and
transmitting (1415,1525), to the first UE (115-c), the measurement data that satisfies the measurement accuracy threshold based at least in part on the identifying.

13. The method of claim 12, wherein identifying the measurement data further comprises:
measuring (1510) sensor data of the one or more measurement types at one or more sensors of the second UE, wherein the sensor data is associated with an accuracy; and
identifying (1520) the subset of the sensor data associated with the accuracy that satisfies the measurement accuracy threshold according to the configuration.

14. An apparatus for wireless communications at a first user equipment UE (115-c), comprising:
a processor (940),
memory (930) coupled with the processor; and
instructions stored in the memory and executable by the processor to cause the apparatus to:
identify a measurement accuracy threshold associated with reporting a sensor measurement over a wireless communication link to the first UE;
transmit to a second UE over the wireless communication link a configuration indicating the measurement accuracy threshold for the first UE for one or more measurement types; and
receive, from the second UE over the wireless communication link, measurement data that satisfies the measurement accuracy threshold according to the configuration, wherein the measurement data is a subset of sensor data measured at the second UE that satisfies the measurement accuracy threshold..

15. An apparatus for wireless communications at a second user equipment UE (115-d), comprising:
a processor (940),
memory (930) coupled with the processor; and
instructions stored in the memory and executable by the processor to cause the apparatus to:
receive over a wireless communication link from a first UE a configuration indicating a measurement accuracy threshold for one or more measurement types associated with reporting a sensor measurement over the wireless communication link to the first UE;
identify measurement data that satisfy the measurement accuracy threshold for the one or more measurement types according to the configuration, wherein the measurement data is a subset of sensor data measured at the second UE that satisfies the measurement accuracy threshold; and
transmit, to the first UE, the measurement data that satisfies the measurement accuracy threshold based at least in part on the identifying.

## Patentansprüche

1. Ein Verfahren für drahtlose Kommunikationen, das durch ein erstes Benutzergerät (User Equipment bzw. UE) (115-c) durchgeführt wird, aufweisend:
Identifizieren (1005, 1105, 1210) eines Messgenauigkeit-Schwellenwerts, der mit dem Berichten einer Sensormessung über eine drahtlose Kommunikationsverbindung an das erste UE assoziiert ist,
Senden (1010, 1115, 1215), an ein zweites UE über die drahtlose Kommunikationsverbindung, einer Konfiguration, die den Messgenauigkeit-Schwellenwert für das erste UE für einen oder mehrere Messtypen angibt, und
Empfangen (1015, 1120, 1225), von dem zweiten UE (115-d) über die drahtlose Kommunikationsverbindung, von Messdaten, die den Messgenauigkeit-Schwellenwert gemäß der Konfiguration erfüllen, wobei die Messdaten ein Teilsatz von an dem zweiten UE gemessenen Sensordaten, die den Messgenauigkeit-Schwellenwert erfüllen, sind.

2. Verfahren nach Anspruch 1, wobei das Identifizieren des Messgenauigkeit-Schwellenwerts weiterhin aufweist:
Identifizieren (1110) einer Vielzahl von Messtyp-Schwellenwerten, die jeweils mit dem Berichten des einen oder der mehreren Messtypen über die drahtlose Kommunikationsverbindung assoziiert sind.

3. Verfahren nach Anspruch 2, wobei die Vielzahl von Messtyp-Schwellenwerten einen Fahrzeuggenauigkeit-Schwellenwert, einen Objektgenauigkeit-Schwellenwert und/oder einen Verletzlicher-Straßenbenutzer-Genauigkeit-Schwellenwert aufweisen.

4. Verfahren nach Anspruch 2, wobei die Vielzahl von Messtyp-Schwellenwerten einen Geschwindigkeitsgenauigkeit-Schwellenwert, einen Größengenauigkeit-Schwellenwert, einen Positionsgenauigkeit-Schwellenwert und/oder einen Winkelgeschwindigkeitsgenauigkeit-Schwellenwert aufweisen.

5. Verfahren nach Anspruch 1, wobei das Senden der Konfiguration, die den Messgenauigkeit-Schwellenwert angibt, weiterhin aufweist:
Messen (1205) von Sensordaten des einen oder der mehreren Messtypen an einem oder mehreren Sensoren des ersten UE, wobei die Sensordaten mit einer Genauigkeit assoziiert sind, und
Senden (1220) der Konfiguration, die den Messgenauigkeit-Schwellenwert für den einen oder die mehreren Messtypen angibt, basierend wenigstens teilweise auf den gemessenen Sensordaten und der assoziierten Genauigkeit.

6. Verfahren nach Anspruch 1, wobei die Konfiguration periodisch gesendet wird.

7. Verfahren nach Anspruch 1, wobei das Identifizieren des Messgenauigkeit-Schwellenwerts weiterhin aufweist:
Empfangen einer Angabe des Messgenauigkeit-Schwellenwerts.

8. Verfahren nach Anspruch 1, wobei das Senden der Konfiguration, die den Messgenauigkeit-Schwellenwert angibt, weiterhin aufweist:
Senden der Konfiguration in einem Informationselement einer Funkressourcensteuerung-Nachricht.

9. Verfahren nach Anspruch 1, wobei der eine oder die mehreren Messtypen jeweils mit einem oder mehreren Sensortypen assoziiert sind.

10. Verfahren nach Anspruch 1, wobei die Messdaten eine Zuverlässigkeitsangabe für jeden Messtyp aufweisen.

11. Verfahren nach Anspruch 1, wobei die drahtlose Kommunikationsverbindung ein Sidelink ist.

12. Ein Verfahren für drahtlose Kommunikationen, das durch ein zweites Benutzergerät (User Equipment bzw. UE) (115-d) durchgeführt wird, aufweisend:
Empfangen (1405, 1505), über eine drahtlose Kommunikationsverbindung von einem ersten UE, einer Konfiguration, die einen Messgenauigkeit-Schwellenwert für einen oder mehrere mit dem Berichten einer Sensormessung über die drahtlose Kommunikationsverbindung an das erste UE (115-c) assoziierte Messtypen angibt,
Identifizieren (1410, 1515) von Messdaten, die den Messgenauigkeit-Schwellenwert für den einen oder die mehreren Messtypen gemäß der Konfiguration erfüllen, wobei die Messdaten ein Teilsatz von an dem zweiten UE gemessenen Messdaten, die den Messgenauigkeit-Schwellenwert erfüllen, sind, und
Senden (1415, 1525), an das erste UE (115-c), der Messdaten, die den Messgenauigkeit-Schwellenwert erfüllen, basierend wenigstens teilweise auf dem Identifizieren.

13. Verfahren nach Anspruch 12, wobei das Identifizieren der Messdaten weiterhin aufweist:
Messen (1510) von Sensordaten des einen oder der mehreren Messtypen an einem oder mehreren Sensoren des zweiten UE, wobei die Sensordaten mit einer Genauigkeit assoziiert sind, und
Identifizieren (1520) des Teilsatzes der Sensordaten, die mit der den Messgenauigkeit-Schwellenwert gemäß der Konfiguration erfüllenden Genauigkeit assoziiert sind.

14. Eine Vorrichtung für drahtlose Kommunikationen an einem ersten Benutzergerät (User Equipment bzw. UE) (115-c), aufweisend:
einen Prozessor (940),
einen Speicher (930), der mit dem Prozessor gekoppelt ist, und
Befehle, die in dem Speicher gespeichert sind und durch den Prozessor ausgeführt werden können, um die Vorrichtung zu veranlassen zum:
Identifizieren eines Messgenauigkeit-Schwellenwerts, der mit dem Berichten einer Sensormessung über eine drahtlose Kommunikationsverbindung an das erste UE assoziiert ist,
Senden, an ein zweites UE über die drahtlose Kommunikationsverbindung, einer Konfiguration, die den Messgenauigkeit-Schwellenwert für das erste UE für einen oder mehrere Messtypen angibt, und
Empfangen, von dem zweiten UE über die drahtlose Kommunikationsverbindung, von Messdaten, die den Messgenauigkeit-Schwellenwert gemäß der Konfiguration erfüllen, wobei die Messdaten ein Teilsatz von an dem zweiten UE gemessenen Sensordaten, die den Messgenauigkeit-Schwellenwert erfüllen, sind.

15. Eine Vorrichtung für drahtlose Kommunikationen an einem zweiten Benutzergerät (User Equipment bzw. UE) (115-d), aufweisend:
einen Prozessor (940),
einen Speicher (930), der mit dem Prozessor gekoppelt ist, und
Befehle, die in dem Speicher gespeichert sind und durch den Prozessor ausgeführt werden können, um die Vorrichtung zu veranlassen zum:
Empfangen, über eine drahtlose Kommunikationsverbindung von einem ersten UE, einer Konfiguration, die einen Messgenauigkeit-Schwellenwert für einen oder mehrere mit dem Berichten einer Sensormessung über die drahtlose Kommunikationsverbindung an das erste UE assoziierte Messtypen angibt,
Identifizieren von Messdaten, die den Messgenauigkeit-Schwellenwert für den einen oder die mehreren Messtypen gemäß der Konfiguration erfüllen, wobei die Messdaten ein Teilsatz von an dem zweiten UE gemessenen Messdaten, die den Messgenauigkeit-Schwellenwert erfüllen, sind, und
Senden, an das erste UE, der Messdaten, die den Messgenauigkeit-Schwellenwert erfüllen, basierend wenigstens teilweise auf dem Identifizieren.

## Revendications

1. Un procédé de communication sans fil effectuée par un premier équipement utilisateur UE (115-c), comprenant les étapes consistant à :
identifier (1005, 1105, 1210) un seuil de précision de mesure associé au rapport d'une mesure de capteur sur une liaison de communication sans fil au premier UE ;
transmettre (1010, 1115, 1215) à un deuxième UE sur la liaison de communication sans fil, une configuration indiquant le seuil de précision de mesure pour le premier UE pour un ou plusieurs types de mesure ; et
recevoir (1015, 1120, 1225), depuis le deuxième UE (115-d) sur la liaison de communication sans fil, des données de mesure qui satisfont le seuil de précision de mesure selon la configuration, dans lequel les données de mesure sont un sous-ensemble de données de capteur mesurées au niveau du deuxième UE qui satisfait le seuil de précision de mesure.

2. Le procédé selon la revendication 1, dans lequel l'identification du seuil de précision de mesure comprend en outre l'étape consistant à :
identifier (1110) une pluralité de seuils de type de mesure associés chacun au rapport d'un ou plusieurs types de mesure sur la liaison de communication sans fil.

3. Le procédé selon la revendication 2, dans lequel la pluralité de seuils de type de mesure comprend un ou plusieurs parmi un seuil de précision de véhicule, un seuil de précision d'objet ou un seuil de précision d'usager vulnérable de la route.

4. Le procédé de la revendication 2, dans lequel la pluralité de seuils de type de mesure comprend un ou plusieurs parmi un seuil de précision de vitesse, un seuil de précision de grandeur, un seuil de précision de localisation ou un seuil de précision de vitesse angulaire

5. Le procédé de la revendication 1, dans lequel la transmission de la configuration indiquant le seuil de précision de mesure comprend en outre :
la mesure (1205) de données de capteur du ou des types de mesure au niveau d'un ou plusieurs capteurs du premier UE, dans lequel les données de capteur sont associées à une précision ; et
la transmission (1220) de la configuration indiquant le seuil de précision de mesure pour le ou les type(s) de mesure en se basant au moins en partie sur les données de capteur mesurées et la précision associée.

6. Le procédé selon la revendication 1, dans lequel la configuration est transmise périodiquement.

7. Le procédé selon la revendication 1, dans lequel l'identification du seuil de précision de mesure comprend en outre l'étape consistant à :
recevoir une indication du seuil de précision de mesure.

8. Le procédé de la revendication 1, dans lequel la transmission de la configuration indiquant le seuil de précision de mesure comprend en outre :
la transmission de la configuration dans un élément d'information d'un message de commande de ressource radio.

9. Le procédé selon la revendication 1, dans lequel le ou les types de mesure sont chacun associés à un ou plusieurs types de capteurs.

10. Le procédé selon la revendication 1, dans lequel les données de mesure comprennent une indication de fiabilité pour chaque type de mesure.

11. Procédé selon la revendication 1, dans lequel la liaison de communication sans fil est une liaison latérale.

12. Un procédé de communication sans fil effectué par un deuxième équipement utilisateur UE (115-d), comprenant les étapes consistant à :
recevoir (1405, 1505) sur une liaison de communication sans fil depuis un premier UE une configuration indiquant un seuil de précision de mesure pour un ou plusieurs types de mesure associés au rapport d'une mesure de capteur sur la liaison de communication sans fil au premier UE (115-c) ;
identifier (1410, 1515) des données de mesure qui satisfont le seuil de précision de mesure pour le ou les types de mesure selon la configuration, dans lequel les données de mesure sont un sous-ensemble de données de capteur mesurées au niveau du deuxième UE qui satisfait le seuil de précision de mesure ; et
transmettre (1415, 1525), au premier UE (115-c), les données de mesure qui satisfont le seuil de précision de mesure sur la base au moins en partie de l'identification.

13. Le procédé selon la revendication 12, dans lequel l'identification des données de mesure comprend en outre les étapes consistant à :
mesurer (1510) des données de capteur du ou des types de mesure au niveau d'un ou plusieurs capteurs du second UE, dans lequel les données de capteur sont associées à une précision, et
identifier (1520) le sous-ensemble des données de capteur associé à la précision qui satisfait le seuil de précision de mesure en fonction de la configuration.

14. Un appareil pour la communication sans fil au niveau d'un premier équipement d'utilisateur UE (115-c), comprenant :
un processeur (940),
une mémoire (930) couplée au processeur ; et
des instructions stockées dans la mémoire et exécutables par le processeur pour amener l'appareil à :
identifier un seuil de précision de mesure associé au rapport d'une mesure de capteur sur une liaison de communication sans fil au premier UE ;
transmettre à un deuxième UE sur la liaison de communication sans fil une configuration indiquant le seuil de précision de mesure pour le premier UE pour un ou plusieurs types de mesure ; et
recevoir, depuis le second UE sur la liaison de communication sans fil, des données de mesure qui satisfont le seuil de précision de mesure selon la configuration, dans lequel les données de mesure sont un sous-ensemble de données de capteur mesurées au niveau du second UE qui satisfait le seuil de précision de mesure.

15. Un appareil pour la communication sans fil au niveau d'un second équipement d'utilisateur UE (115-d), comprenant :
un processeur (940),
une mémoire (930) couplée au processeur ; et
des instructions stockées dans la mémoire et exécutables par le processeur pour amener l'appareil à :
recevoir sur une liaison de communication sans fil à partir d'un premier UE une configuration indiquant un seuil de précision de mesure pour un ou plusieurs types de mesure associés au rapport d'une mesure de capteur sur la liaison de communication sans fil au premier UE ;
identifier des données de mesure qui satisfont le seuil de précision de mesure pour le ou les types de mesure selon la configuration, dans lequel les données de mesure sont un sous-ensemble de données de capteur mesurées au niveau du second UE qui satisfait le seuil de précision de mesure ; et
transmettre, au premier UE, les données de mesure qui satisfont le seuil de précision de mesure sur la base au moins en partie de l'identification.
